# EUROPEAN PATENT SPECIFICATION

(11) **EP 4 018 842 B1**
(45) Date of publication and mention of the grant of the patent: **20.03.2024**
(21) Application number: 20854595.4
(22) Date of filing: 17.08.2020
(51) Int. Cl.: A23L 27/20, A23L 27/40

(54) **POWDERED SEASONING CONTAINING MAGNESIUM CHLORIDE**
PULVERGEWÜRZ MIT MAGNESIUMCHLORID
ASSAISONNEMENT EN POUDRE CONTENANT DU CHLORURE DE MAGNÉSIUM

(30) Priority: 22.08.2019 JP 2019152070; 07.08.2020 JP 2020134310
(43) Date of publication of application: 29.06.2022
(73) Proprietor: NISSIN FOODS HOLDINGS CO., LTD., Yodogawa-ku Osaka-shi, Osaka 532-8524 (JP)
(72) Inventor: NAKATANI, Taiga, Osaka-shi Osaka 532-8524 (JP); OGUCHI, Norie, Osaka-shi Osaka 532-8524 (JP); YAMAUCHI, Kohei, Osaka-shi Osaka 532-8524 (JP); KONO, Hiroyuki, Osaka-shi Osaka 532-8524 (JP); TAMAKI, Shinji, Osaka-shi Osaka 532-8524 (JP)
(74) Representative: Mewburn Ellis LLP
(86) International application number: PCT/JP2020/030945
(87) International publication number: WO 2021/033657

(56) References cited:
- JP-A- H04 356 164
- JP-A- S61 265 067
- JP-A- 2001 226 401
- JP-A- 2006 274 100
- JP-A- 2008 031 225
- JP-A- 2013 111 035
- US-A1- 2011 229 607

## Description

### TECHNICAL FIELD

The present invention relates to a powdered seasoning comprising magnesium chloride and starch.

### BACKGROUND ART

In order to prevent high blood pressure due to excessive intake of sodium, a large number of so-called low salt products with a reduced sodium chloride content have been launched into the market in recent years. In the "Dietary Reference Intakes for Japanese" 2010 edition by the Ministry of Health, Labour and Welfare, the recommended daily allowance of salt is less than 9 g for an adult male and is less than 7.5 g for an adult female, but in the 2015 edition, the recommended daily allowance of salt is less than 8 g for an adult men and is less than 7 g for an adult women. Thus, each daily recommended allowance of salt has been decreased, and from this, it is considered that the intention to reduce salt intake further increases in the future.

As a salt reducing method, a method of substituting potassium chloride for sodium chloride is often used. However, since potassium chloride has a unique harsh taste, etc., a method of using magnesium chloride has been studied in order to further reduce salt. For example, Patent Literatures 1 and 2 disclose instant noodles with favorable texture and saltiness compatible with each other obtained by applying magnesium chloride to the noodles.

On the other hand, magnesium chloride is deliquescent, so that use of it as a seasoning in powder form has limitation. For example, Patent Literature 3 discloses a method of coating magnesium chloride with fat or oil to suppress deliquescence, but there is a problem in that flavor and melt-in-the-mouth feeling are deteriorated because fat or oil having a relatively high melting point is used. In addition, there is use restriction because this cannot be stored at temperatures exceeding the melting point of fat or oil.
Patent Literature 4 (JP 2008 031225 A) discloses a clathrate of cyclodextrin and a mixture of metal ion compounds from seawater, in which the bitterness and deliquescence of such a mixture are reduced, and a method for producing the same.

### CITATION LIST

### PATENT LITERATURE

Patent Literature 1
   Japanese Patent Laid-Open No. 2019-103454
Patent Literature 2
   Japanese Patent Laid-Open No. 2019-110833
Patent Literature 3
   Japanese Patent Laid-Open No. 2001-017093
Patent Literature 4
   Japanese Patent Laid-Open No. 2008-031225

### SUMMARY OF INVENTION

### TECHNICAL PROBLEM

An object of the present invention is to obtain a magnesium chloride-containing powdered seasoning with suppressed deliquescence that is storable for a long time.

### SOLUTION TO PROBLEM

The present inventors have found that by coating magnesium chloride with a certain amount or more of starch, deliquescence of magnesium chloride is suppressed, and the seasoning can be stored in powder form for a long time. Moreover, they have found that by using oxidized starch as the starch, a powdered seasoning that can be utilized in a wider range of application without affecting viscosity or a taste of powdered soup is obtained.

### ADVANTAGEOUS EFFECT OF INVENTION

Owing to the completion of the present invention, a magnesium chloride-containing powdered seasoning with suppressed deliquescence that is storable for a long time can be obtained.

### DESCRIPTION OF EMBODIMENTS

The present invention is a powdered seasoning comprising at least magnesium chloride and starch, wherein the powdered seasoning comprises the starch in an amount of 5 parts by weight or more and 40 parts by weight or less based on 1 part by weight of magnesium chloride. The present invention will be described in detail hereinafter.

### Powdered seasoning

The powdered seasoning of the present invention refers to a solid seasoning that is dissolved rapidly by pouring hot water thereon. Specifically, even a massive one is also included in the powdered seasoning in the present invention as long as it is dissolved rapidly (on the order of 10 seconds) in hot water. On the other hand, a seasoning that is not dissolved rapidly in hot water is not included in the powdered seasoning even if it is in powder form.

### 1. Raw material

### 1-1. Magnesium chloride

Magnesium chloride is a material having saltiness and strong bitterness, but by using it in combination with sodium chloride or potassium chloride, the bitterness is softened to emphasize saltiness. On this account, the present inventors have studied a method of using magnesium chloride as a substitute for sodium chloride for many years.

The problem when using magnesium chloride as a substitute for sodium chloride is deliquescence of magnesium chloride. In the present invention, the deliquescence can be suppressed by coating magnesium chloride with a certain amount or more of starch.

As the magnesium chloride, not only magnesium chloride having high purity but also an additive containing magnesium chloride as a main component, such as a bittern, can be used. Since magnesium chloride is extremely unstable when it is alone, it can be generally obtained as magnesium chloride hexahydrate in which bound water has been incorporated.

### 1-2. Starch

The starch in the present invention refers to starch having been subjected to no treatment (raw starch), modified starch, such as distarch phosphate or oxidized starch, dextrin having a dextrose equivalent (hereinafter "DE") of 12 or less, or the like, and these starches may be used in combination. By coating magnesium chloride with a certain amount or more of the starch, deliquescence of magnesium chloride is suppressed, and the powdered seasoning can be stably stored in powder form.

In the present invention, dextrose having a dextrose equivalent of 9 or less, oxidized starch, or distarch phosphate, each being excellent in deliquescence suppression, is preferable, and oxidized starch is most preferable.

The powdered seasoning in the present invention needs to contain the starch in an amount of 5 parts by weight or more and 40 parts by weight or less based on 1 part by weight of magnesium chloride, and more preferably contains the starch in an amount of 12 weights or more and 40 parts by weight or less. If the amount of the starch is too small, deliquescence of magnesium chloride cannot be suppressed, and the powder form cannot be maintained. If the amount of the starch is too large, saltiness of magnesium chloride is masked, and therefore, the powdered seasoning does not exert its function as a salty seasoning.

### 1-3. Other components

In the present invention, components other than magnesium chloride and starch may be contained. Specifically, saltiness components, such as sodium chloride and potassium chloride, sweetness components, such as glucose, sucrose and oligosaccharide, umami components, such as glutamic acid and inosinic acid, sourness components, such as acetic acid and citric acid, spices, etc. can be appropriately added as long as the flavor and storability are not deteriorated. However, other components are preferably added after the magnesium chloride and the starch are mixed and stirred. If other components are added before the magnesium chloride is coated with the starch, there is a possibility that deliquescence of magnesium chloride is not suppressed.

### 2. Production method

The production method for the seasoning is not particularly limited, and an existing method can be used. As previously described, it is preferable to add other components after the magnesium chloride and the starch are mixed and stirred.

### EXAMPLES

Next, the present invention will be described in detail with reference to trial production examples, but the present invention is in no way limited by these trial production examples.

Magnesium chloride hexahydrate (MgCl₂·6H₂O), and starches described in Table 1 (all manufactured by Matsutani Chemical Industry Co., Ltd.) were provided.

### (Starch viscosity measurement conditions)

To starch, boiling water was added, and they were well stirred to prepare a mixed liquid with a solid content of 3%.

Next, while keeping the temperature of the mixed liquid at 70°C, a viscosity of the mixed liquid was measured using a B-type viscometer (TOKYO KEIKI INC., B8L).

**[Table 1]**

| Starch | | Properties | |
|---|---|---|---|
| Generic name | Trade name | Viscosity | Other characteristics |
| Oxidized starch | Stabilose S-10 | less than 200 CP | |
| Dry oxidized starch | Lactoway 4 | less than 200 CP | |
| Dextrose [DE10-12] | Pinedex #2 | less than 200 CP | sweetness |
| Dextrose [DE7-9] | Pinedex #1 | less than 200 CP | sweetness |
| Tapioca starch acetate | Sakura | 1000 CP | |
| Distarch phosphate | Food Starch T-1 | 800 CP | |
| Acetylated distarch phosphate | WMS | 200 CP | |
| Indigestible distarch phosphate | Pine Starch RT | less than 200 CP | not swollen in water, and turbid |

### Deliquescence test

### (Comparative Test Example)

In a 225 ml beaker, 100 g of starch listed in Table 1 was placed, and the opening part of the beaker was covered with a nonwoven fabric so that water droplets or dust might not enter. This specimen was allowed to stand still in an incubator (temperature: 40°C, humidity: 75%RH), and the sample weight was measured every hour. The "weight increase rate (%)" shown in Table 2 indicates an increase rate of a sample weight after the start of the test to a sample weight before the start of the test (0 hour).

**[Table 2]**

| Table 2 | | Comparative Test Example | | | | | | | |
|---|---|---|---|---|---|---|---|---|---|
| | | 1 | 2 | 3 | 4 | 5 | 6 | 7 | 8 |
| Starch type (part(s) by weight) | Oxidized starch | 100 | | | | | | | |
| | Dry oxidized starch | | 100 | | | | | | |
| | Dextrose [DE10-12] | | | 100 | | | | | |
| | Dextrose [DE7-9] | | | | 100 | | | | |
| | Tapioca starch acetate | | | | | 100 | | | |
| | Distarch phosphate | | | | | | 100 | | |
| | Acetylated distarch phosphate | | | | | | | 100 | |
| | Indigestible distarch phosphate | | | | | | | | 100 |
| Sample weight before test (part(s) by weight) | | 100 | 100 | 100 | 100 | 100 | 100 | 100 | 100 |
| Weight increase rate (%) | 1 h | 0.95 | 2.70 | 1.25 | 2.30 | 0.68 | 0.48 | 0.52 | 0.97 |
| | 2 h | 1.17 | 3.93 | 1.70 | 3.00 | 0.88 | 0.63 | 0.68 | 1.37 |
| | 3 h | 1.37 | 4.78 | 2.05 | 3.57 | 1.00 | 0.88 | 0.95 | 1.62 |

### (Test Example 1)

Into a closed container, 10 parts of magnesium chloride hexahydrate and 10 parts of oxidized starch were introduced, and they were stirred and mixed. After the stirring and mixing, 100 g of the sample was transferred into a 225 ml beaker. The beaker was sealed with a lid so that the sample might not be exposed to external air, and the sample was stored until the start of the test.

Similarly to the case of Comparative Test Example, 100 g of the sample was placed in a 225 ml beaker, and the opening part of the beaker was covered with a nonwoven fabric so that water droplets or dust might not enter. This specimen was allowed to stand still in an incubator (temperature: 40°C, humidity: 75%RH), and the sample weight increase rate (%) was measured every hour. Moreover, in order to clarify whether this weight increase rate was due to deliquescence of magnesium chloride or moisture absorption of the starch, a difference between this weight increase rate and the weight increase rate of Comparative Test Example was calculated. In Table 3, only the difference of the weight increase rate 3 hours after the start of the test is shown.

### (Test Examples 2 to 20)

The deliquescence test was carried out by changing the type of the starch and the compounding ratio. The test results are as shown in Tables 3 and 4.

**[Table 3]**

| Table 3 | | Test Example | | | | | | | | | |
|---|---|---|---|---|---|---|---|---|---|---|---|
| | | 1 | 2 | 3 | 4 | 5 | 6 | 7 | 8 | 9 | 10 |
| MgCl₂ · 6H₂O | | 10 | 10 | 10 | 10 | 10 | 10 | 10 | 10 | 10 | 10 |
| Starch type (part(s) by weight) | Oxidized starch | 10 | 30 | 50 | 70 | 100 | | | | | |
| | Dry oxidized starch | | | | | | 10 | 30 | 50 | 70 | 100 |
| | Dextrose [DE10-12] | | | | | | | | | | |
| | Dextrose [DE7-9] | | | | | | | | | | |
| | Tapioca starch acetate | | | | | | | | | | |
| | Distarch phosphate | | | | | | | | | | |
| | Acetylated distarch phosphate | | | | | | | | | | |
| | Indigestible distarch phosphate | | | | | | | | | | |
| Sample weight before test (part(s) by weight) | | 20 | 40 | 60 | 80 | 110 | 20 | 40 | 60 | 80 | 110 |
| Weight increase rate (%) | 1 h | 16.00 | 2.50 | 2.58 | 1.06 | 1.09 | 21.50 | 4.62 | 5.00 | 2.56 | 2.95 |
| | 2 h | 20.88 | 3.37 | 3.13 | 1.28 | 1.34 | 27.88 | 6.75 | 6.67 | 3.88 | 4.00 |
| | 3 h | 25.13 | 4.19 | 3.83 | 1.63 | 1.64 | 31.88 | 8.00 | 7.54 | 5.28 | 4.68 |
| Comparative Test Example | | 1 | | | | | 2 | | | | |
| Comparative Test Example, Weight increase rate at 3h later (%) | | 1.37 | 1.37 | 1.37 | 1.37 | 1.37 | 4.78 | 4.78 | 4.78 | 4.78 | 4.78 |
| Difference from Comparative Test Example (at 3h later) | | 23.75 | 2.81 | 2.46 | 0.25 | 0.26 | 27.10 | 3.22 | 2.76 | 0.50 | -0.10 |

**[Table 4]**

| Table 4 | | Test Example | | | | | | | | | |
|---|---|---|---|---|---|---|---|---|---|---|---|
| | | 11 | 12 | 13 | 14 | 15 | 16 | 17 | 18 | 19 | 20 |
| MgCl₂ · 6H₂O | | 10 | 10 | 10 | 10 | 10 | 10 | 10 | 10 | 10 | 10 |
| Starch type (part(s) by weight) | Oxidized starch | | | | | | | | | | |
| | Dry oxidized starch | | | | | | | | | | |
| | Dextrose [DE10-12] | 10 | 30 | 50 | 70 | 100 | | | | | |
| | Dextrose [DE7-9] | | | | | | 100 | | | | |
| | Tapioca starch acetate | | | | | | | 100 | | | |
| | Distarch phosphate | | | | | | | | 100 | | |
| | Acetylated distarch phosphate | | | | | | | | | 100 | |
| | Indigestible distarch phosphate | | | | | | | | | | 100 |
| Sample weight before test | | 20 | 40 | 60 | 80 | 110 | 110 | 110 | 110 | 110 | 110 |
| Weight increase rate (%) | 1 h | 14.63 | 5.25 | 4.04 | 1.88 | 1.93 | 2.07 | 1.09 | 1.02 | 1.11 | 1.27 |
| | 2 h | 20.50 | 7.38 | 5.12 | 2.50 | 2.66 | 3.05 | 1.43 | 1.39 | 1.61 | 1.75 |
| | 3 h | 23.75 | 8.62 | 6.25 | 3.72 | 3.23 | 3.84 | 1.80 | 1.77 | 2.11 | 2.16 |
| Comparative Test Example | | 3 | | | | | 4 | 5 | 6 | 7 | 8 |
| Comparative Test Example, Weight increase rate at 3h later (%) | | 2.05 | 2.05 | 2.05 | 2.05 | 2.05 | 3.57 | 1.00 | 0.88 | 0.95 | 1.62 |
| Difference from Comparative Test Example (at 3h later) | | 21.70 | 6.58 | 4.20 | 1.67 | 1.18 | 0.27 | 0.80 | 0.90 | 1.16 | 0.53 |

In the Examples, magnesium chloride hexahydrate (molar mass: 203.31 g/mol) was used. Accordingly, in Test Example 1, starch was added about twice (weight ratio) the amount of magnesium chloride (molar mass: 95.211 g/mol), and in Test Example 2, starch was added about 6 times (weight ratio) the amount of magnesium chloride.

As a result of the tests, it can be seen that when starch was added about twice (weight ratio) the amount of magnesium chloride, starch was not able to suppress deliquescence of magnesium chloride (Test Examples 1, 6 and 11). On the other hand, it can be seen that when starch was added about 6 to 10 times the amount of magnesium chloride, starch was able to suppress deliquescence of magnesium chloride (Trial Production Examples 2, 3, 7, 8, 12 and 13), and when starch was added more than 14 times, deliquescence hardly took place (Trial Production Examples 4, 5, 9, 10, and 14 to 20).

From Trial Production Example 15 and Trial Production Example 16, it can be seen that dextrose having DE of 9 or less was more preferable.

Moreover, by comparing Examples 5 and 10 with Examples 15 to 20, it can be seen that oxidized starch was most effective for deliquescence suppression.

## Claims

1. A powdered seasoning comprising at least magnesium chloride and starch, wherein
the powdered seasoning comprises the starch in an amount of 5 parts by weight or more and 40 parts by weight or less based on 1 part by weight of magnesium chloride.

2. The powdered seasoning according to claim 1, comprising dextrose having a dextrose equivalent of 9 or less, oxidized starch, or distarch phosphate as the starch.

3. The powdered seasoning according to claim 1, comprising oxidized starch as the starch.

## Patentansprüche

1. Pulverförmiges Würzmittel, das zumindest Magnesiumchlorid und Stärke umfasst, wobei
das pulverförmige Würzmittel die Stärke, bezogen auf 1 Gewichtsteil Magnesiumchlorid, in einer Menge von 5 Gewichtsteilen oder mehr und 40 Gewichtsteilen oder weniger umfasst.

2. Pulverförmiges Würzmittel nach Anspruch 1, das Dextrose mit einem Dextrose-Äquivalent von 9 oder weniger, oxidierte Stärke oder Distärkephosphat als Stärke umfasst.

3. Pulverförmiges Würzmittel nach Anspruch 1, das oxidierte Stärke als Stärke umfasst.

## Revendications

1. Assaisonnement en poudre comprenant au moins du chlorure de magnésium et de l'amidon, dans lequel l'assaisonnement en poudre comprend de l'amidon en une quantité de 5 parties en poids ou plus et de 40 parties en poids ou moins sur la base de 1 partie en poids de chlorure de magnésium.

2. Assaisonnement en poudre selon la revendication 1, comprenant du dextrose présentant un équivalent de dextrose de 9 ou moins, de l'amidon oxydé ou du phosphate de diamidon en tant qu'amidon.

3. Assaisonnement en poudre selon la revendication 1, comprenant de l'amidon oxydé en tant qu'amidon.
